# EUROPÄISCHE PATENTANMELDUNG

(11) **EP 0 826 755 A2**
(43) Veröffentlichungstag der Anmeldung: **04.03.1998**
(21) Anmeldenummer: 97114302.9
(22) Anmeldetag: 19.08.1997
(51) Int. Cl.: C09J 163/00, C09J 123/28, C08K 5/32

(54) **Klebstoffsystem für Gummi/Metall-Verbunde**

(30) Priorität: 24.08.1996 DE 19634329
(71) Anmelder: Henkel Kommanditgesellschaft auf Aktien, 40589 Düsseldorf-Holthausen (DE)
(72) Erfinder: Lange, Ilona, Dr., 40764 Langenfeld (DE); Gies, Birgit, 40764 Langenfeld (DE); Nagorny, Ulrich, 40721 Hilden (DE); Beiersdorf, Wolf-Dieter, Dr., 40625 Düsseldorf (DE); Alberts, Heinz-Werner, 40225 Düsseldorf (DE)

(57) **Zusammenfassung**

Es werden unter Vulkanisationsbedingungen Gummi/Metall-Verbunde mit gutem Korrosionsschutz und hoher Haftung erhalten, und zwar auch bei Einwirkung von kochendem Wasser.
Das erfindungsgemäße Klebstoffsystem umfaßt
A) ein Zweikomponenten-Epoxy-System, das bei Raumtemperatur flüssig ist und dessen Harz auf einem Bisphenol A/Bisphenol F-Gemisch und dessen Härter auf einen cycloaliphatischen Amin basiert, für eine Schicht als Primer und
B) einen Klebstoff auf der Basis eines halogenierten Polyolefins und einer aromatischen Nitrosoverbindung

## Beschreibung

Die Erfindung betrifft ein Klebstoffsystem aus einem Epoxid als Primer und einem Klebstoff sowie seine Verwendung zur Herstellung von Gummi/Metall-Verbunden.

Ein derartiges Klebstoffsystem ist bekannt. In der DE 27 48 686 wird ein Verfahren zur Erhöhung der Korrosionsfestigkeit eines Gummi/Metall-Verbundes beschrieben, bei dem zunächst das Metall mit einem Epoxid-Pulverlack beschichtet wird. Durch Erwärmen wird daraus ein Film gebildet. Nach der Härtung bei ca. 200 °C wird zumindest auf einen Teil des Epoxid-Lackes ein adhäsives System aus einer Spachtelmasse und einem Klebstoff aufgetragen. Der adhäsiv-beschichtete Teil wird schließlich mit einer vulkanisierbaren elastomeren Zusammensetzung in Kontakt gebracht. Nach Vulkanisation unter Anwendung von Hitze und Druck wird die korrosionsfeste Gummi/Metall-Struktur erhalten.
Dieses bekannte Verfahren ist aufwendig: So müssen mehrfach und teilweise hohe Temperaturen angewendet werden, um die Lackschicht zu erzeugen. Außerdem ist ein separater Auftrag einer Spachtelmasse notwendig. Trotz dieser aufwendigen Verarbeitung reicht die Haftfestigkeit des Gummis auf dem Metall auf Dauer nicht aus. Vor allen Dingen zeigen die so hergestellten Verbunde keine Beständigkeiten in kochendem Wasser unter Zugbelastung, die für die Halt- und Dauerbelastbarkeit von Gummi/Metall-Verbunden unabdingbar sind. Ursache für die unzureichende Beständigkeit ist die geringe Haftung der Epoxidschicht auf dem Metall. Sie läßt sich z.B. mit einem Metallspatel ohne weiteres ganzflächig abheben.

In der EP 0 054 861 wird ebenfalls ein Verfahren zur Herstellung eines Lacküberzuges auf einem Metallteil eines Gummi/Metall-Verbundteiles beschrieben. Als Lacksystem wird ein wasserlösliches, vorkondensiertes Epoxyester-System verwendet, wobei es sich bei den Estergruppen um mit Formaldehyd reagierende Harzgruppen auf der Basis von Phenol, Melamin oder Harnstoff handelt. Die Spendersysteme sind abgeblockt. Auf die bei etwa 250 °C eingebrannte Lackschicht wird dann ein handelsübliches Haftsystem aufgebracht, das im wesentlichen aus halogenierten Polymeren in Abmischung mit Füllstoffen, Harten und Vernetzer besteht.

In der älteren deutschen Anmeldung mit dem Aktenzeichen 1 95 15 234.4 werden ebenfalls Gummi/Metall-Verbunde beschrieben, bei denen unter anderem eine Epoxidschicht als Primer für die nachfolgende Verklebung empfohlen wird. Als Epoxid-System wird Metallon E 2203 angegeben, wobei das Verhältnis von Harz : Härter gleich 100 : 40 sein soll.Als Klebstoff wird das Bindemittel Chemosil 411 und 220 beschrieben, welches im wesentlichen aus halogenierten Polymeren und Vernetzer besteht. Bei dem Metallon E 2203 handelt es sich lediglich um einen Härter. Ein konkretes Epoxid-Harz wurde nicht genannt. Das gilt auch für das genannte Metallon E 2202. Als erfindungswesentlich wird dort die Verwendung von 10 bis 80 Gew.-% an Korrosionsschutzpigmenten in dem Epoxid-Lack angegeben.

Ausgehend von diesem Stand der Technik bestand die Aufgabe darin, eine möglichst beständige Metallbeschichtung zu finden, die auch als Primer für die Verklebung von Gummi und Metall geeignet ist und die eine einfache Verarbeitung ermöglicht und dennoch gute Gebrauchseigenschaften der Gummi/Metall-Verbunde ergibt. Insbesondere sollte die Haftfestigkeit zwischen Metall und Gummi - vorzugsweise zwischen Metall und Klebstoff - bei gutem Korrosionsschutz für die Metallfläche verbessert werden, und zwar auch bei Einwirkung von heißem Wasser.

Die erfindungsgemäße Lösung ist den Patentansprüchen zu entnehmen. Sie besteht im wesentlichen darin, daß das Klebstoffsystem
A) ein Zweikomponenten-Epoxy-System, das bei Raumtemperatur flüssig ist und dessen Hart auf einem Bisphenol A/Bisphenol F-Gemisch und dessen Härter auf einen cycloaliphatischen Amin basiert, für eine Schicht als Primer und
B) einen Klebstoff auf der Basis eines halogenierten Polyolefins und einer aromatischen Nitrosoverbindung
umfaßt. Der Kern der Erfindung ist dabei, daß das Zweikomponenten-Epoxy-System zur Beschichtung von Metallen bei Raumtemperatur flüssig ist und das Hart auf einem Bisphenol A/Bisphenol F-Gemisch basiert und der Härter auf einem cycloaliphatischen Amin.

Als "Raumtemperatur flüssig" werden leicht bis zähflüssige, niedermolekulare Epoxidharze bis zu einer Molmasse von 500 verstanden. Ein derartiges pastöses bzw. dickflüssiges System kann bei Raumtemperatur oder bei wenig erhöhter Temperatur durch Tauchen, Pinseln und Sprühen aufgetragen werden.

Das erfindungsgemäße Zweikomponenten-Epoxid-System umfaßt a) ein Epoxid-Harz auf der Basis eines vorzugsweise unmodifizierten, flüssigen Bisphenol A/Bisphenol F-Gemisches und b) einen Härter auf der Basis eines cycloaliphatischen Amins. Untere dem Bisphenol A ist das 2,2-Bis-(4-hydroxyphenyl)-propan zu verstehen und unter dem Bisphenol F das Bis-(4-hydroxyphenyl)-methan. Daraus wird durch Umsetzung mit Epichlorhydrin der Diglycidylether hergestellt. Das Molverhältnis der Reaktanten beeinflußt den Aggregatzustand des Epoxidharzes. Ein erfindungsgemäßes Harz ist CHEM RES 30.

Der Härter besteht aus einem cycloaliphatischen Amin, insbesondere aus Isophorondiamin, das mit unmodifiziertem Bisphenol A umgesetzt wurde. Als Verdünner wird Benzylalkohol eingesetzt, um die Viskosität zu erniedrigen. Ein erfindungsgemäßer Härter ist Chemammina CA 17.

Von besonderer Bedeutung ist, daß das Harz und der Härter in äquivalenten Verhältnissen zur Reaktion gebracht werden. Brauchbar sind auch Epoxy-Systeme mit folgenden Gewichtsverhältnissen Hart zu Härter: 2 (Harz) : 0,8 - 1,5 (Härter), bevorzugt sind Mischungen mit 2 Teilen Harz : 1 Teil Härter.

Das erfindungsgemäße Zweikomponenten-Epoxy-System kann durch Zusatz von Lösemittel verdünnt werden. Als Lösemittel kommen in Frage: Xylol, Methyl-Isobutylketon, Butanol, Butylglykol, 1-Methoxy-2-propanol, Methoxypropylacetat, Benzylalkohol bzw. Mischungen der selbigen usw.. Bevorzugte Verdünner sind z.B. Benzylalkohol, oder sie haben einen Siedepunkt von mehr als 75 °C. Das Lösemittel bzw. die Lösemittelgemische können in einer Menge von 0 bis 25 Gew.-%, insbesondere von 0 bis 15 Gew.-% in dem Epoxy-System enthalten sein, und zwar bevorzugt in dem Härter.
Das erfindungsgemäße Zweikomponenten-Epoxy-System kann auch anorganische oder organische Füllstoffe enthalten, und zwar in einer Menge von 0 bis 50, insbesondere von 0 bis 20 und vor allem von 0 bis weniger als 10 Gew.-%, bezogen auf das Harz. Konkrete brauchbare Füllstoffe sind: Bariumsulfat, Eisenoxid, Kieselsäure, Perlgut S 130, Nipol 1312, Trapylen HE 1070 und Ruß.

Je nach Bedarf können außerdem dem Fachmann bekannte organische oder anorganische Farbstoffe, Weichmacher, Verdünner, Verlaufshilfsmittel, Beschleuniger usw. zugesetzt werden.

Das erfindungsgemäße Zweikomponenten-Epoxid-System ist schon bei Raumtemperatur reaktiv und härtet bei 20 °C innerhalb von 4 h aus. In Abhängigkeit von der Temperatur kann die Härtung beschleunigt werden, z.B. bei 50 °C in 90 min, bei 60 °C in 30 min und bei 80 °C in 10 min. Durch Zusatz von geeigneten Beschleunigern kann die Aushärtzeit auf 1,5 min verkürzt werden. Die Kombination von Temperatureinwirkung und Zusatz von Beschleuniger verringert die Trocken- bzw. Aushärtzeiten ebenfalls.

Das erfindungsgemäße Zweikomponenten-Epoxy-System eignet sich vorzüglich als Primer für die Verklebung von Metallen mit Gummi. Zweckmäßigerweise wird dazu ein Klebstoff auf der Basis von halogenierten Polyolefinen verwendet. Dabei handelt es sich vorzugsweise um lösungsmittelhaltige Klebstoffe. Derartige Klebstoffe sind beschrieben z.B. in US-PS 4,119,587 und DE 30 41 841, auf die ausdrücklich voll Bezug genommen wird. Bevorzugte halogenierte Polyolefine sind halogeniertes Polyisopren oder chlorsulfoniertes Polyethylen. Eine bevorzugte aromatische Nitrosoverbindung ist p-Dinitrosobenzol.

Das Klebstoffsystem wird in folgender Menge aufgetragen: Das Zweikomponenten-Epoxy-System wird in Schichtdicken von 10 bis 100 µm, vorzugsweise 15 bis 50 µm aufgetragen, nach dem Trocknen wird die Schicht mit dem Klebstoff in Schichtstärken von 5 bis 25 µm, vorzugsweise von 7 bis 15 µm versehen.

Das Metall kann z.B. sein: Stahl, Aluminium, Kupfer, Messing oder dergleichen, insbesondere Eisen und seine Legierungen. Es ist keine umfangreiche Vorbereitung der Metalloberfläche notwendig, schon ein Entfetten der Metalloberfläche reicht aus, um ausgezeichnete Bindungen zu erhalten. Natürlich werden sie durch eine mechanische oder chemische Vorbehandlung verbessert. Zur mechanischen Metallvorbehandlung können z.B. legierte Stähle zunächst in stabilisiertem flüssigen oder dampfförmigen Perchlorethylen entfettet werden und danach mit einem harten, scharfkantigen Strahlgut mit einer Korngröße von 0,5 - 2 mm (bevorzugt Hartgußkiese 0,8 - 1,2 mm) gestrahlt werden. Die mittlere Rauhigkeit sollte max. 20 mm betragen. Die so geschaffene aktive Oberfläche muß fett- und ölfrei sein. Andernfalls ist eine erneute Entfettung durchzuführen. (Wird ein Probekörper in destilliertes Wasser getaucht und wieder entnommen, sollte der Wasserfilm länger als 10 Sekunden geschlossen bleiben.) Aluminium, Messing, andere Buntmetalle oder Edelstahl werden, wie vorab beschrieben, vorbehandelt; jedoch wird hier Elektrokorund anstelle von Hartgußkies eingesetzt.

Das Zweikomponenten-Epoxy-System wird vollflächig auf die vorbehandelte Metalloberfläche aufgetragen, und zwar auf konventionelle Art, z.B. durch Gießen, Rollen, Streichen, Tauchen, Rakeln und insbesondere durch Spritzen, vor allem mit Druckluft. Auch sonstige in der Lacktechnik bekannte Auftragsverfahren sind anwendbar, außer der Anwendung von Elektrophorese. Die Auftragsmenge richtet sich danach, ob die Flächen noch zusätzlich durch Gummi geschützt werden oder nicht. Für den Fall, daß sie mit Gummi geschützt wird, genügt eine Schichtdicke im trockenen Zustand von 5 - 30, insbesondere von 7 bis 17 µm. Für den Fall, daß das Metall nicht durch Gummi geschützt wird, sollte die Schichtdicke 10 bis 100, insbesondere 20 bis 80 µm betragen.

Das auf die Metalloberfläche aufgetragene Epoxy-System wird nun in dem Maße gehärtet, wie es für die nachfolgende Bearbeitung notwendig ist, d.h. es wird vollständig ausgehärtet, wenn die Schicht als Lack dienen soll. Wenn die Epoxy-Schicht dagegen als Primer für eine Verklebung des Metalls mit Gummi dienen soll, dann wird sie nur so weit verfestigt, daß eine gute Handhabung bis zur Vulkanisation möglich ist, ohne daß die Schicht beschädigt wird. Dafür reicht unter Umständen eine einfache Trocknung(Ablüftung) bei Umgebungstemperatur bzw. bei Lufttemperaturen bis zu 50 °C aus.

Die Trocknung (Ablüftung) richtet sich nach den konkreten Bedingungen der jeweiligen Situation. Ihre optimale Gestaltung kann leicht durch wenige Versuche herausgefunden werden. Zum Beispiel empfiehlt es sich, Filme mit einer Dicke von 10 µm Trockenschichtstärke 20 Minuten bei Raumtemperatur oder 1 Minute mit Umluft von 120 °C zu trocknen. Bei einer Trockenschichtstärke von 20 µm ist eine Trocknung von 45 Minuten bei Raumtemperatur oder von 2 Minuten mit Umluft von 120 °C zweckmäßig. Diese Trockenzeit bei 120 °C kann auf 30 Sekunden reduziert werden, wenn auf 60 °C vorgewärmte Teile gespritzt wird. Die Objekttemperatur der vorgewärmten Teile sollte jedoch ausreichende Benetzung der Oberfläche zulassen und daher je nach gewählter Verdünnung in einem bestimmten Temperaturbereich liegen. Der nach oben durch die Siedetemperatur des Lösungsmittels begrenzt ist. Kommen beschichtete Metallteile mit einer Trockenschichtstärke von mehr als 20 µm im direkten Kontakt mit der Vulkanisierform, so ist eine intensivere Härtung des Filmes (z.B. 2 Minuten mit Umluft von 200 °C) zweckmäßig, um eine Verschmutzung der Formen zu vermeiden. Härtungen in IR-, UHF- oder Induktionsstromanlagen sind ebenso möglich. Bei letztgenannten Verfahren besteht die Gefahr der Übervernetzung des Primers, falls mit zu energiereichen Einstellungen gearbeitet wird.

Die so mit einer Epoxid-Schicht grundierten Metallteile können sofort oder auch - bei entsprechend sauberer Lagerung - später und an einem anderen Ort zur Herstellung von Gummi/Metall-Teilen verwendet werden. Dazu ist zunächst der Auftrag eines Klebstoffes für eine spätere Heißvulkanisation notwendig. Geeignete Klebstoffe basieren auf Mischungen von halogenierten Polymeren und Vernetzungssystemen sowie gegebenenfalls Zuschlagstoffen (z.B. Füllstoffe, Filmbildner oder Halogenfänger). Derartige handelsübliche Klebstoffe sind: Chemosil 411, Chemosil 220 oder Chemosil 231 G.

Die Applikation der Klebstoffe erfolgt auf bekannte Weise. Im einzelnen sind die technischen Informationsblätter der Hersteller zu beachten.

Die mit dem Epoxy-System und mit dem Klebstoff beschichteten Metallteile werden in einem Vulkanisationswerkzeug mit der zu vulkanisierenden Kautschukmischung verbunden. Geeignet sind alle Kautschuk-Typen, die bei der Heißvulkanisation vernetzbar sind: z.B. NR, IR, IIR, NBR, HNBR, CR, ACM, CSM, AEM, SBR und EPDM. Bevorzugte Kautschuke sind: NR, TR und NBR.

Die Vulkanisationstemperatur liegt zwischen 90 und 220 °C, vorzugsweise zwischen 150 und 180 °C. Die Vulkanisationszeit richtet sich bekanntlich nach der Vulkanisationsgeschwindigkeit, der Kautschukmischung und der Größe der Teile.

Mit der Erfindung verbinden sich folgende Vorteile:
- Bekannte und bewährte Metallvorbehandlungsmethoden können beibehalten werden.
- Das 2-Komponenten-Expoxid-System sowie der Klebstoff können auf bereits bestehende Anlagen wie z.B. den Kettenspritzautomaten oder Flächenspritzanalgen verarbeitet werden.
- Es können unterschiedliche Schichtstärken gezielt aufgebracht werden und so sowohl Haftung als auch Korrosion optimiert werden.
- Es werden Metall-Beschichtungen erhalten, die sich durch eine außergewöhnliche Beständigkeit gegenüber kochendem Wasser auszeichnen.
- Der Korrosionsschutz durch die Epoxid-Schicht wirkt auf dem Metall ganzflächig. Empfindliche Übergänge zum Gummi entfallen. Sie treten vor allem bei der nachträglichen Beschichtung von vulkanisierten Verbundteilen auf. An diesen Übergängen bilden sich häufig Risse aufgrund des unterschiedlichen Dehnungsverhaltens von Gummi, Metall und Korrosionsschutzmittel.
- Da der Lack-Primer (Epoxid-Schicht) ein Korrosionsschutzmittel ist, entfällt der Auftrag eines Korrosionsschutzmittels nach der Vulkanisation.
- Der Primer kann frei von Halogenen sein.
- Der Lack-Primer kann frei von flüchtigen Lösemitteln sein oder auf Wasser basieren.
- Die Haftung des Gummis auf dem Metall wird drastisch verbessert, was durch die Kochendwasserbeständigkeit des Epoxid-Primers - selbst bei zusätzlicher Anwendung einer mechanischen Belastung - bewiesen wird.

Die Erfindung wird anhand der folgenden Beispiele erläutert.

### Beispiel 1: Korrosionsschutzwirkung

- Prüfkörper:: ST37-Prüfbleche, 15 x 7 cm, mit Hartgußkies gestrahlt.
- 2-Komponenten-Epoxid-System: a) Harz: CHEM RES 30
b) Härter: CHEMAMMINA CA 17 im Verhältnis 2 / 1
- Applikation:: a) Rakel,; Schichtdicke: 35 µm
b) Pinsel; Schichtdicke: 100 µm
- Aushärtung:: 90 Min. bei 55 °C
- Ritzwerkzeug:: Ritzstichel nach Clemen;
1 Ritzspur / Blech
- Korrosionstest:: gemäß VDA (= Verband der Automobilindustrie) 6 Zyklen Wechselklima; ein Zyklus besteht aus:
a) 24 h Salzsprühnebelprüfung bei 35 °C mit 5 % NaCl-Lösung, pH 6,5 bis 7,2,
b) 4 x 24 h Kondenswassertest, je 8 h bei 40 °C (100 % rel. Luftfeuchtigkeit) und anschließend 16 h bei Raumtemperatur,
c) 2 x 24 h bei Raumtemperatur (RT).
- Ergebnis:: a) Bei der Probe mit dem Rakel-Auftrag wurde eine Unterrostung von 1,0 mm festgestellt,
b) Bei der Probe mit dem Pinselauftrag wurde keine Unterrostung festgesstellt.

### Beispiel 2: Heißwasserbeständigkeit

Die mit den Lacken vorschriftsmäßig beschichteten Bleche werden für 30 min in kochendes Wasser gelegt. Nach dem Herausnehmen der heißen Bleche wird mit Hilfe eines Metallspatels versucht, die Lackschicht abzukratzen.

### Ergebnisse:

| Nr. | geprüfter Lack | Beurteilung der Lackoberfläche |
|---|---|---|
| a | Pulverlacke* | lassen sich ganzflächig abheben |
| b | Heizkörperlacke** | lassen sich in breiten Spuren abschieben |
| c | Chem Res E 30/Chemammina CA 17 | nur kleine Kratzer auf der Oberfläche |
| d | KT-Lacke*** | lassen sich in breiten Spuren abschieben |
| e | Autophorese Lack, ACC 703 | läßt sich in breiten Spuren abschieben |

| | | |
|---|---|---|
| * folgende Punkte wurden geprüft: Herberts, Durotherm PE/EP 400, FE 33-9011 M Herberts, PE/TGIC 200 Herberts, Durotherm, Polyester AL 9320 Herberts, PUR/Polyester, AL 23-9334 Beckers Pulverlack, AI 88, PE/TGIC Vedoc, Epoxid-Pulverlack, 90-10-0009-0, farblos Vedoc, PE-Pulverlack, 90-50-0016-5 Vedoc, PE/EPO 90-22-9999-7 Hüls, Polyamid, Vestosint 1164, weiß, Nr. 913634 | | |
| ** Brillux, Heizkörperlack 990 Brillux, Heizkörperlack 265, antikweiß, 9115 | | |
| *** Kathodische Tauchlacke: IDAC, Aqualux N 2800, schwarz bleifrei IDAC, Aqualux N 2800, grau, bleihaltig Herberts, Einschichtlack, Typ R 39564, kieselgrau | | |

### Beispiel 3: Gummi/Metall-Prüfkörper nach DIN 53531

### I. Ausgangsmaterialien

1. Metall: Stahl ASTM-B-Körper;
Vorbehandlung: Die Metallteile werden in 1,1,1-Trichlorethandampf entfettet, bis kein Kondensat mehr abläuft (ca. 10 min). Nach dem Abkühlen werden die Stahlteile mit Stahlgußkies gestrahlt, bis sie eine einheitliche mattgraue Oberfläche haben. Nach dem Strahlen werden die Teile nochmal, wie oben geschildert, mit Dampf vom Strahlstaub befreit.
2. 2-Komponenten-Epoxid-System (in Gew.-%):
a)

| | |
|---|---|
| Harz: Chem RES E30 | 21 |
| Lösemittel | 14 |
| Bariumsulfat | 61,5 / 59,5 |
| Eisenoxid (schwarz) | 1 |
| Kieselsäure | 0,5 |
| Pergut S 130 | 2 / 4 |

b) Härter: Chemammina CA 17
Verhältnis von Harz : Härter = 2 : 1
3. Klebstoff: Chemosil 411 (bestehend im wesentlichen aus halogenierten Polyolefinen und aromatischen Nitrosoverbindungen)
4. Kautschuk:
a) NR-Mischung 11426.

| Mischungsbestandteile | Masseanteil |
|---|---|
| SMR 5CV60 | 100 |
| Stearinsäure | 2 |
| ZnORS | 5 |
| Vulkanox 4010 NA | 1 |
| Vulkanox HS | 1 |
| Ozonwachs 111 | 1 |
| Corax A | 20 |
| Ingraplast SRL | 3 |
| Vulkacit Thiuram | 0,25 |
| Vulkacit MOZ | 1,5 |
| Schwefel | 1 |
| Summe | 135,75 |

b) NBR-Mischung 60041,

| Mischungsbestandteile | Masseanteil |
|---|---|
| Perbunan N3807NS | 100 |
| Stearinsäure | 1 |
| Vulkanox HS | 1 |
| Vulkanol FH | 8 |
| ZnO-RS | 5 |
| Paraffin 40 - 45 °C | 0,3 |
| Corax A | 60 |
| Vulkacit CZ | 0,6 |
| Vulkacit D | 0,2 |
| Santogard PVI | 0,3 |
| Schwefel | 2,0 |
| Summe | 178,4 |

### II. Herstellung des Prüfkörpers gemäß DIN 53531

1. Applikation: Sowohl das Epoxid-System als auch der Klebstoff wurden durch Tauchen aufgetragen, und zwar in einer Schichtdicke von 12 und 23 µm nach der Aushärtung. Der Klebstoff wurde in einer Schichtstärke von 12 µm aufgetragen.
2. Aushärtung: Das Epoxid-System wurde bei 55 °C in 90 min ausgehärtet.
3. Der Klebstoff wurde in 20 min bei RT getrocknet.
4. Vulkanisation:
   Gemäß DIN 53531 bei 154 °C während 10 min bei ca. 100 bar Pressendruck in einer Vulkanisierform.

### III. Untersuchungen

Nach der Vulkanisation werden die Probekörper nach DIN 53500 konditioniert.
1. Bestimmung der Haftfestigkeit ( = HF)
   In einer Reißmaschine werden jeweils 6 Probekörper einer Schälprüfung nach DIN 53531 Teile 1 unterzogen. Die dabei gefundenen Haftwerte werden arithmetisch gemittelt.
   Das Reißbild wird begutachtet und in % R (Gummibruch) bewertet. Der Haftwert liegt im üblichen Bereich von mehr als daN/inch. Der Gummibruch liegt mit 100 R ebenfalls im üblichen Bereich von mindestens 98 % Gummibruch.
2. Kochendwassertest (= KWT)
   Die Prüfkörper werden in einer geeigneten Apparatur mit 2 kg Belastung an der Gummilasche senkrecht zur Bindefläche belastet und 2 Stunden in kochendem Wasser belassen. Nach dieser Zeit wird das Wasser abgelassen und die Proben im entlasteten Zustand erkalten lassen. Nach Abschälen der Gummischicht wird die Schädigung der Bindung beurteilt und bewertet. Der Gummibruch liegt mit 100 R im üblichen Bereich von mindestens 90 % Gummibruch.

**Tabelle 1**

| Haftfestigkeit (HF in daN/inch) und Kochendwasserbeständigkeit (KWT; Beschreibung des Reißbildes) von erfindungsgemäßen Gummi/Metall-Verbunden | | | | | | | |
|---|---|---|---|---|---|---|---|
| Zusatz an Pergut S 130 | Schichtdicke µm | HF daN/inch | NR 11426 | KWT | HF daN/inch | NBR 6004 1 | KWT |
| 0 | 16 | ... | 100 R | 100 R | ... | 100 R | 100 R |
| 2 | 12 | 38 | 100 R | 100 R | 94 | 100 R | 100 R |
| 4 | 23 | 35 | 100 R | 100 R | 103 | 100 R | 100 R |

## Patentansprüche

1. Klebstoffsystem für Gummi/Metall-Verbunde, umfassend
A) ein Zweikomponenten-Epoxy-System, das bei Raumtemperatur flüssig ist und dessen Harz auf einem Bisphenol A/Bisphenol F-Gemisch und dessen Härter auf einem cycloaliphatischen Amin basiert, für eine Schicht als Primer und
B) einen Klebstoff auf der Basis eines halogenierten Polyolefins und einer aromatischen Nitrosoverbindung.

2. Klebstoffsystem nach Anspruch 1, dadurch gekennzeichnet, daß das Harz ein Poly-Glycidylether, insbesondere ein Di-Glycidylether ist.

3. Klebstoffsystem nach Anspruch 1, dadurch gekennzeichnet, daß der Härter auf Isophorondiamin basiert.

4. Klebstoffsystem nach Anspruch 1, dadurch gekennzeichnet, daß das Zweikomponenten-Epoxy-System ein Epoxid-Harz auf der Basis eines unmodifizierten flüssigen Bisphenol A/Bisphenol F-Gemisches und einen Härter auf Basis eines cycloaliphatischen Amines umfaßt.

5. Klebstoffsystem nach Anspruch 1, dadurch gekennzeichnet, daß das Zweikomponenten-Epoxy-System Füllstoffe in einer Menge von 0 bis 50, insbesondere von 0 bis weniger als 10 Gew.-% enthält, bezogen auf das Harz.

6. Klebstoffsystem nach Anspruch 1, dadurch gekennzeichnet, daß das Zweikomponenten-Epoxy-System 0 bis 25 Gew.-%, vorzugsweise 0 bis 15 Gew.-% eines Lösemittels enthält, bezogen auf den Härter.

7. Verwendung des Klebstoffsystems nach mindestens einem der Ansprüche 1 bis 6 zur Herstellung eines Gummi/Metall-Verbundes, dadurch gekennzeichnet, daß das Zweikomponenten-Epoxysystem in einer Schichtdicke von 15 bis 50 µm auf das Metall und der Klebstoff in der Schichtdicke von 5 bis 15 µm auf die gehärtete Epoxidschichtaufgetragen wird.

8. Verwendung des Klebstoffsystems nach Anspruch 7, dadurch gekennzeichnet, daß das Metall über die Epoxid- und die Klebstoff-Schicht mit dem Gummi unter den Bedingungen der Heißvulkanisation verbunden wird.
